Europäisches Patentamt

European Patent Office

Office européen des brevets

(19)

(11) Veröffentlichungsnummer: **0 138 800**
**B1**

(12) **EUROPÄISCHE PATENTSCHRIFT**

(45) Veröffentlichungstag der Patentschrift: **23.05.90**

(21) Anmeldenummer: **84890156.7**

(22) Anmeldetag: **16.08.84**

(51) Int. Cl.⁵: **B 63 H 7/02,** B 64 C 11/16

(54) **Luftschraube.**

(30) Priorität: **17.08.83 AT 2949/83**

(43) Veröffentlichungstag der Anmeldung:
**24.04.85 Patentblatt 85/17**

(45) Bekanntmachung des Hinweises auf die
Patenterteilung:
**23.05.90 Patentblatt 90/21**

(84) Benannte Vertragsstaaten:
**AT BE CH DE FR GB IT LI LU NL SE**

(56) Entgegenhaltungen:
**WO-A-82/04411**
**DE-A-2 703 568**
**FR-A- 810 726**

**1979 N.F.F.S. INTERNATIONAL SYMPOSIUM
REPORT, 1979, Seiten 33-35; P. VAN LEUVEN:
"A new look at propeller aerofoils"**

(73) Patentinhaber: **Asboth, Oscar
Schlösselgasse 2
A-1080 Wien (AT)**

(72) Erfinder: **Asboth, Oscar
Schlösselgasse 2
A-1080 Wien (AT)**

(74) Vertreter: **Gibler, Ferdinand, Dipl.Ing.Dr.tech.
Dorotheergasse 7/14
A-1010 Wien (AT)**

EP 0 138 800 B1

**Beschreibung**

Die Erfindung betrifft eine Luftschraube gemäß dem Oberbegriff des Anspruchs 1.

Derartige Luftschrauben sind einerseits für den Einsatz als Schiffs-Antriebssystem bzw. zum Antrieb von Hubschraubern oder Landfahrzeugen geeignet und werden nachstehend bei dieser Art der Verwendung als "negative" Luftschrauben bezeichnet. Andererseits können diese Luftschrauben auch zum Antrieb von Generatoren unter Ausnützung der Windenergie Verwendung finden, in welchem Zusammenhang sie nachstehend als "positive" Luftschrauben bezeichnet werden. Insbesondere für das Befahren kleiner, seichter Binnengewässer, Flüsse, Kanäle u. dgl. ist eine Propulsionsmethode unter Verwendung von negativen Luftschrauben die geeignetste, da damit einerseits in wirtschaftlicher Weise ein kleiner Tiefgang ausgenützt werden kann und andererseits we der durch Wellen verursachte Uferbeschädigungen noch neue Unterwasserbänke erzeugt werden. Es sind daher durch eine derartige Antriebsmethode großer Wirtschaftsgebiete, die wegen der geringen Wassertiefe der Flüsse auf viele tausend kilometer langen Strekken entweder gar nicht oder nur mit unwirtschaftlichen Schrauben- oder Rad-Wasserfahrzeugen schiffbar sind, unter Ausnützung der genannten Vorteile durch Schiffe befahrbar. Auch mit Bezug auf auf den Antrieb von insbesondere von langsam fahrenden Landfahrzeugen ergeben sich dahingehend Vorteile, daß sich Bodenunebenheiten kaum auswirken.

Die positive Luftschraube ist auch auch infolge der Energieknappheit als Antrieb für Generatoren von besonderer Bedeutung. Die bisherigen Luftschrauben weisen entweder einen hohen Gütegrad oder einen guten Wirkungsgrad, aber Schrauben, die beide Eigenschaften in praktisch ausreichendem Masse vereinen, sind nicht vorhanden.

Die Entwicklungsarbeiten an Luftschrauben richteten sich stets auf die Erfordernisse des Flugzeuges, wobei ausschließlich die Erreichung eines Höchstwertes des Wirkungsgrades erstrebt wird.

Luftschrauben lassen sich aber wie bereits erwähnt auch bei anderweitigen Fahrzeugen verwenden, wo ein hoher Gütegrad eine grosse Rolle spielt und in manchen Fällen sogar wichtiger als der Wirkungsgrad ist. Diese Verwendungsmöglichkeit bezieht sich auf solche Fahrzeuge, die im Dauerbetrieb auch mit kleiner Geschwindigkeit fahren können und mit großem Schlupf der Luftschraube (60% und darüber) arbeiten müssen. Es sind dies z.B. Landfabrzeuge, die infolge ungünstiger Fahrbahnbeschaffenheit (Steigung, schwierige, sandige oder sumpfige Gelände usw.) trotz der entwickelten großen Schraubenstrahlgeschwindigkeit nur kleine Fahrgeschwindigkeit erzeugen können und daher mit großem Schlupf der Luftschraube arbeiten müssen. Das gleiche trifft für langsam fahrende Wasserfahrzeuge zu, bei denen z.B. Schleppkähne stets eine kleine Fahrgeschwindigkeit trotz der großen Luftschraubenstrahlgeschwindigkeit aufweisen werden. Dies gilt auch für Hubschrauber, bei denen eine große Standzugkraft (für den Schwebezustand) oder eine große Zugkraft für den senkrechten Aufstieg bei großem Schlupf notwendig ist, wobei auch ein guter Schraubenwirkungsgrad eine wichtige Rolle spielt, nämlich für die Erzielung der durch Hubschraubenachsenneigung hervorgerufenen Waagerechtgeschwindigkeit.

Da solche Luftschrauben fehlten, die gleichzeitig hohen Gütegrad und hohen Wirkungsgrad vereinten, mußten alle Versuche einer Ausrüstung von Fahrzeugen mit Luftschrauben scheitern, wenn die diesen Fahrzeugen eine große Zugkraft bei verschiedensten Beschaffenheiten der Fahrbahn, also bei großen und bei kleinem Schlupf entwickelt werden sollte.

Die Erfindung besteht non bei einer Luftschraube der eingangs genannten Art darin, daß das Verhältnis des Durchmessers (D) der Luftschraube zu ihrer Steigungshöhe (H) einer Umdrehung etwa den 1,18 bis 2,9 fachen Wert des Gütegrades aufweist und ihre Blattbreite (B) dem 0,09 bis 0,19-fachen Wert der Steigungshöhe (H) entspricht.

Bei einem Gütegrad von mindestens 70% bis theoretisch 100% ergibt sich hieraus die Foderung, daß das Verhältnis von D zu H in einem Bereich zwischen 0,826 bis 2,9 liegen soll.

Besonders vorteilhaft ist es, wenn die Luftschraube mit über ihren Durchmesser gleichbleibender bzw. nahezu gleichbleibender Steigungshöhe (H) ausgebildet ist.

Die mit den erfindungsgemäßen Luftschrauben durchgeführten Versuche ergaben bemerkenswerte Resultate. So entwickelte z.B., ein Kraftfahrzeug, das einen Achsenabstand von 3.0m, einen 500 cm³ Motor und eine Schraube gemäß der Erfindung mit einem Durchmesser von nur 1.5m hatte, bei einem Gegenwind von 50 km/St eine Fahrgeschwindigkeit von 70 km/St und nahe—ohne Anlauf—eine Steigung von 5—10% mit einer Geschwindigkeit von 50mk/St. Ferner konnte ein Schlepper mit einem Motor von 100 PS und einer erfindungsgemäßen Luftschraube von 5m Durchmesser einen Schleppkann von 650 t mit einer Totwassergeschwindigkeit von 7.5 kg/St schleppen.

Die diesbezüglich durchgeführten Entwicklungsarbeiten haben gezeigt, daß bei Schleppkähnen bis 200 t Ladung ein Luftschraubenantrieb gemäß vorliegender Erfindung günstiger bzw. wirtschaftlicher ist als ein Schiffsschraubenantrieb.

So z.B. ein Selbstfahrer mit 150 t Ladung und 80 PS Motor fährt mit einer Totwassergeschwindigkeit von 11 km/St bei Verwendung einer erfindungsgemäßen Schraube von 5m Durchmesser.

Daraus kann der Schluß gezogen werden, daß mit der erfindungsgemäßen Luftschraube im Vergleich zu gleich großen Flugzeugpropellern eine wesentlich höhere Schubkraft erreichbar ist. Überdies ergibt sich durch die erfindungsgemäße Ausgestaltung der Luftschraube eine starke Luftschraubenstrahlgeschwindigkeit, sodaß bei starkem Gegenwind (negative Anblasung) die Zugkraft der Luftschraube nur minimal beeinflußt wird.

Durch diese Erfindung wird ermöglicht, daß z.B. bei Anwendung der Luftschraube bei Landfahrzeugen viele mechanische Bestandteile (Getriebe, Gang, Differential, Kardanwelle usw.) überflüssig werden und dadurch die Konstruktion einfach und das Gewicht des Fahrzeuges sehr klein wird. Trotz der relativ klein dimensionierten Luftschraube kann das Fahrzeug auf fast jedem schwierigen Gelände fahren und ist auf Gegenwind unempfindlich. Falls die erfindungsgemäß ausgebildete Luftschraube bei Helikoptern oder Senkrechtstartern zur Anwendung gelangt, so kann sie wegen des hohen Gütegrades bzw. der Unempfindlichkeit auf Gegenwind wesentlich bessere Steigleistung und Horizontalgeschwindigkeiten erreichen.

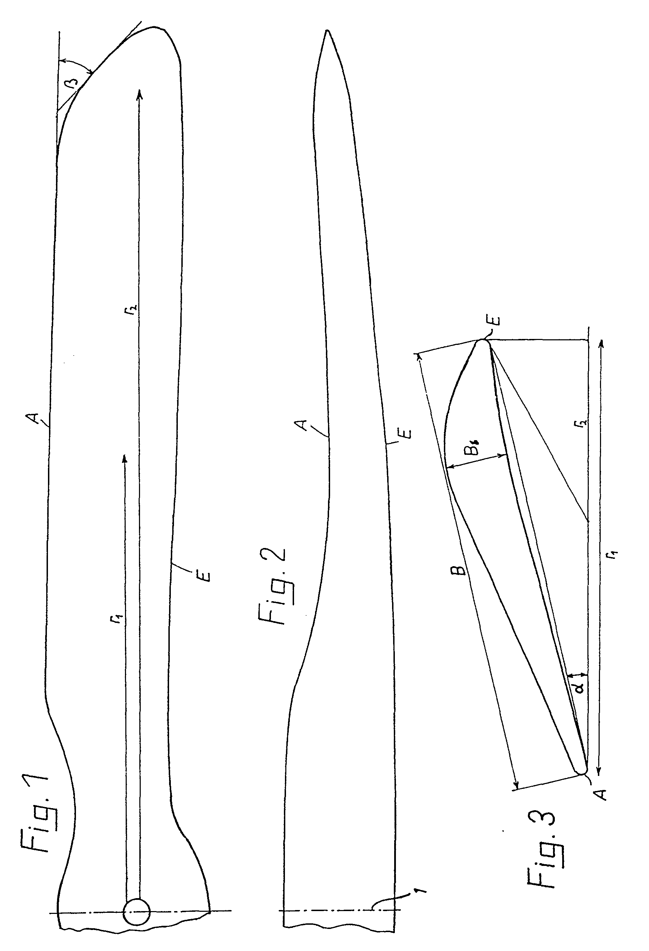

Als besonders vorteilhaft hat es sich gezeigt, wenn in Weiterbildung der Erfindung die Luftschraube so ausgestaltet wird, daß im Querschnitt gesehen, die Umrißlinie (U) der Saugfläche im Bereich zwischen größter Blattstärke (BS) und Austrittskante (A) im wesentlichen eine Gerade ist (Fig. 3). Hieraus ergibt sich der Vorteil, daß die insgesamt wirksame Saugfläche vergroßert wird. Das ist insbesondere bei Anwendungsfällen wichtig, bei welchen niedrige Umdrehungsgeschwindigkeit der Luftschraube vorliegen.

Weitere Details und Vorteile der Erfindung werden an Hand eines in der Zeichnung dargestellten Ausführungsbeispiels näher beschrieben.

Es zeigen:

Fig. 1 eine Ansicht einer Luftschraubenhälfte in Achsrichtung,

Fig. 2 eine Projektion derselben Luftschraubenhälfte senkrecht zur Achsrichtung und

Fig. 3 einen vergrößerten Querschnitt des Luftschraubenblattes.

Die in Fig. 1 ersichtliche Eintrittskante E liegt über der Austrittskante A, in Fig. 2 befindet sich die Austrittskante A oben. Der Winkel β liegt in einem Bereich von etwa 40 bis 55°.

Im in Fig. 3 dargestellten Querschnitt ist die Blattbreite—die im Bereich des aerodynamischen Druckmittelpunktes zu messen ist—mit B die Blattdicke mit Bs gekennzeichnet, diese ist im ersten Drittel der Blattbreite von der Eintrittskante weg am größten. Das Luftschraubenblatt schließt mit einer zur Achse 1 senkrecht verlaufende Ebene einen Winkel α ein, der—je nach Entfernung zur Achse 1—zwischen etwa 45° und 10° liegt. Die Steigung H liegt in einem Bereich von 0,3 bis 0,6 multipliziert mit dem Durchmesser D der Luftschraube.

Unter dem bereits erwähnten Gütegrad ist das Leistungsverhältnis der Luftschraube am Stand bei einem Schlupf von 100% und unter Wirkungsgrad das Schraubenleistungsverhältnis bei voller Fahrt zu verstehen. Der Schlupf drückt die verhältnismässige Abweichung zwischen der tatsächlich erreichten und der theoretisch erreichbaren Geschwindigkeit aus und entspricht der Differenz aus theoretischer und tatsächlicher Geschwindigkeit, umgekehrt proportional zur theoretischen Geschwindigkeit. Aus der Bendeman'schen Formel läßt sich der (effektive) Gütegrad errechnen:

$$\eta = \frac{S}{3\sqrt{2\gamma/g}\ FL^2,}$$

wobei S die effektive Schubkraft in N, $\gamma/g$ die Masse von $1m^3$ Luft, F die Schraubenkreisfläche in $m^2$ und L die aufgenommene Leistung in $m^2kg/sec^3$ ist. Der Wirkungsgrad wird nach der Formel

$$\varepsilon = \frac{S \cdot v.}{75\ \rho}$$

berechnet, wobei S die Schraubenkraft in kg, v die Fahrzeuggeschwindigkeit in m/sec und $\rho$ die aufgenommene Leistung der Schraube in PS ist.

Gemäß der Erfindung sollen nun die Verhältnisse bei einer Luftschraube so gewählt werden, daß das Verhältnis des Durchmessers (D) der Luftschraube zu ihrer Steigung (H) etwa dem 1,18 bis 2,9 fachen Wert des Gütegrades aufweist und ihre Blattbreite (B) dem 0,9 bis 0,19 fachen Wert der Steigung (H) entspricht. Für den Einsatz der erfindungsgemäßen Luftschrauben bei Schleppkähnen od. dgl., also Fahrzeugen mit niederer Geschwindigkeit und hohem Schlupf, ist zweckmäßigerweise die obere Grenze des Verhältnisses von Durchmesser zu Steigung zu wählen. Der untere Verhältnisbereich ist eher dann zweckmäßig, wenn die Fahrzeuge schnell fahren sollen, aber auch im Dauerbetrieb langsam fahren können. Das Verhältnis der Blattbreite B zur Steigung H wirkt sich insoferne aus, als die Geschwindigkeit mit zunehmendem Blattbreitenverhältnis zunimmt. Durch die erfindungsgemäße Ausbildung der Luftschraube besteht der Vorteil, daß selbst bei starker Abnahme des Schlupfs infolge Gegenwindes die Standzugkraft nicht im selben Ausmaß abfällt.

Infolge der Beibehaltung eines hohen Schlupfes selbst bei Gegenwind, Steigungen oder anderen Fahrbahneigenschaften, die üblicherweise eine starke Abnahme des Schlupfes verursachen würden, ergibt sich bei der Erfindung der besondere Vorteil der Verwendung von Luftschrauben kleinen Durchmessers selbst für die oben genannten Fälle. Bisher war es zur Erhaltung der Zugkraft bei kleinem Schlupf und kleinen Geschwindigkeiten erforderlich, den Durchmesser der Luftschraube wesentlich zu vergrößern, was infolge der Beibehaltung der anderen Abmessungen zu recht ungünstigen Verhältnissen von Durchmesser zu Steigung und Blattbreite zu Steigung führte.

Bei der in der Zeichnung dargestellten Ausführungsform einer erfindungsgemäßen Luftschraube sind die Verhältnisse so gewählt, daß der aerodynamische Druckmittelpunkt in einem Abstand von Mittelpunkt der Luftschraube angeordnet ist, der etwa dreiviertel des Radius der Luftschraube entspricht.

Die Krümmungsradien der Eintrittskante E entsprechen etwa ein viertel bis ein drittel der größten Blattstärke $B_S$. Im Querschnitt gesehen, ist der Krümmungsradius der Eintrittskante E im Vergleich zum Krümmungsradius der Austrittskante A größer, wobei der Krümmungsradius der Austrittskante A im Bereich etwa des ersten, äußeren Drittels der Luftschraube am kleinsten ist. Ferner sind die Vorhältnisse so gewählt, daß der Krümmungsradius der Austrittskante A im Bereich der äußere Hälfte der Luftschraube immer etwa den selben Wert hat.

Im Querschnitt der Luftschraube gesehen, ist die Umrißlinie U der Saugfläche im Bereich zwischen größter Blattstärke $B_S$ und Austrittskante A im wesentluchen eine Gerade, wie dies Fig. 3 zeigt.

Nachstehend ist ein Ausführungsbeispiel einer erfindungsgemäßen Luftschraube für den Antrieb eines Schiffes angegeben. Diesem Ausführungsbiespiel fand ein Antriebsmotor mit einer Leistung von 116 PS und 3400 Umdrehungen pro Minute Verwendung. Zwischen Luftschraube und Motor war ein Untersetzungsgetriebe zwischen geschaltet sodaß die Antriebsgeschwindigkeit der Luftschraube 1100 Umdrehungen pro Minute betrug.

Für diesen Anwendungsfall wurde ein Durchmesser von 3500 mm und ein Verhältnis von D zu H von 2,12 gewählt. Die Luftschraube wurde unter diesen Voraussetzungen und unter Berücksichtigung der Tatsache, daß unter der Voraussetzung von B/H=0,09 bis 0,19 bei H=1650, B=148,5 bis 313,5 betragen kann, realisiert (Nabenhöhe 200 mm).

Bei einem anderen Ausführungsbeispiel betrug der Durchmesser D gleich 700 mm, die Steigung H gleich 393 mm und die Blattbreite im Mittel B=55 mm bei einer Nabenhöhe von 45 mm. Messungen mit dieser Luftschraube haben gezeigt, daß bei 500 U/min ein spezifischer Schub von 53 N/PS erreichbar ist und, daß die Luftschraube bei 1 PS Leistungsaufnahme 20 N Schub entwickeln kann. Diese Meßergebnisse lassen schön erkennen, daß bei einer größeren Luftschraube bei niedrigen Drehzahlen ein wesentlichen höherer Wert als bei Flugzeugpropeller (10 N/PS) im Schub erreicht werden kann.

**Patentansprüche**

1. Luftschraube, wie z.B. für den Antrieb von Fahrzeugen mit kleinen Fahrgeschwindigkeiten bei hohem Schlupf, etwa mindestens 60%, die einen nach der Formel:

$$\eta = \frac{S}{3\sqrt{2}\ \gamma/g \cdot F \cdot L^2}$$

errechneten Gütegrad $\eta$ von mindestens 70%, wobei S die effetieve Schubkraft in N, $\gamma/g$ die Masse von 1 m³ Luft in kg/m³, F die Schraubenkreisfläche in m² und L die aufgenommene Leistung in m² kg/s³ bedeuten, für 100% Schlupf aufweist, dadurch gekennzeichnet, daß das Verhältnis des Durchmessers (D) der Luftschraube zu ihrer Steigungshöhe (H) einer Umdrehung etwa den 1,18 bis 2,9 fachen Wert des Gütegrades aufweist und ihre Blattbreite (B) dem 0,09 bis 0,19-fachen Wert der Steigungshöhe (H) entspricht.

2. Luftschraube nach Anspruch 1, dadurch gekennzeichnet, daß sie mit über ihren Durchmesser gleichbleibender, bzw. nahezu gleichbleibender Steigungshöhe (H) ausgebildet ist.

3. Luftschraube nach Anspruch 1 oder 2, dadurch gekennzeichnet, daß der aerodynamische Druckmittelpunkt in einem Abstand vom Mittelpunkt angeordnet ist, der etwa 3/4 des Radius der Luftschraube entspricht.

4. Luftschraube nach Anspruch 1, 2 oder 3, dadurch gekennzeichnet, daß im Querschnitt gesehen der Krümmungsradius der Eintrittskante (E) etwa 1/4 bis 1/3 der größten Blattstärke ($B_S$) entspricht.

5. Luftschraube nach einem der Ansprüche 1 bis 4, dadurch gekennzeichnet, daß der Winkel α der Blattneigung mit zunehmendem Durchmesser ständig abnimmt und zwischen etwa 45° bis 10° liegt.

6. Luftschraube nach einem der Ansprüche 1 bis 5, dadurch gekennzeichnet, daß die Blattstärke ($B_S$) im ersten Drittel der Blattbreite von der Eintrittskante weg am größten ist.

7. Luftschraube nach einem der Ansprüche 1 bis 6, dadurch gekennzeichnet, daß im Querschnitt gesehen der Krümmungsradius der Eintrittskante (E) im Vergleich zum Krümmungsradius der Austrittskante (A) größer ist, wobei der Krümmungsradius der Austrittskante (A) im Bereich etwa des ersten, äußeren Drittels der Luftschraube am kleinsten ist.

8. Luftschraube nach einem der Ansprüche 1 bis 7, dadurch gekennzeichnet, daß der Krümmungsradius der Austrittskante (A) im Bereich der äußeren Hälfte der Luftschraube etwa immer denselben Wert hat.

9. Luftschraube nach einem der Ansprüche 1 bis 8, dadurch gekennzeichnet, daß im Querschnitt gesehen, die Umrißlinie (U) der Sauglfäche im Bereich zwischen größter Blattstärke ($B_S$) und Austrittskante (A) im wesentlichen eine Gerade ist (Fig. 3).

**Revendications**

1. Hélice aérienne, par exemple pour l'entraînement de véhicules à vitesse de marche réduite avec un glissement important d'au moins 60% environ, présentant d'après la formule:

$$\eta = \frac{S}{3\sqrt{2}\gamma/g \cdot F \cdot L^2}$$

un rendement mécanique calculé $\eta$ d'au moins 70%, S étant la force de poussée effective en N, γ/

g étant la masse de 1 m³ d'air en kg/m³, F étant l'aire du cercle de l'hélice en m² et L la puissance absorbée en m²kg/S³ par un glissement de 100%, caractérisée en ce que le rapport du diamètre (D) de l'hélice au pas hélicoïdal (H) représente de 1.18 à 2.9 fois la valeur du rendement mécanique et sa largeur de pale (B) de 0.09 à 0.19 fois le pas hélicoïdal (H).

2. Hélice aérienne selon la revendication 1, caractérisée en ce qu'elle présente un pas constant ou sensiblement constant le long son diamètre.

3. Hélice selon l'une des revendications 1 ou 2, caractérisée en ce que le centre de poussée aérodynamique est situé à une distance du centre égale à environ 3/4 du rayon de l'hélice.

4. Hélice selon l'une des revendications 1, 2 ou 3, caractérisée en ce que en section le rayon de courbure du bord d'attaque (E) est égal à environ 1/4 à 1/3 de l'épaisseur maximale de la pale ($B_s$).

5. Hélice selon l'une des revendications 1 à 4, caractérisée en ce que l'angle de pale α décroit de façon continue le long du diamètre croissant et est compris entre environ 45° et 10°.

6. Hélice selon l'une des revendications 1 à 5, caractérisée en ce que l'épaisseur la pale ($B_s$) est maximale dans le premier tiers de la largeur de la pale (B) à partir du bord d'attaque.

7. Hélice selon l'une des revendications 1 à 6, caractérisée en ce qu'en section, le rayon de courbure du bord d'attaque (E) est supérieur au rayon de courbure du bord de fuite (A), le rayon de courbure de ce dernier étant minimal dans la région du premier tiers, extérieur, de l'hélice.

8. Hélice selon l'une des revendications 1 à 7, caractérisée en ce que le rayon de courbure du bord de fuite (A) dans la zone de la moitié extérieure de l'hélice est à peu près constant.

9. Hélice selon l'une des revendications 1 à 8, caractérisée en ce qu'en section, le contour (U) de la face de dépression dans la zone comprise entre l'épaisseur de pale maximale ($B_s$) et le bord de fuite est sensiblement une ligne droite (Fig. 3).

## Claims

1. Airscrew, such as, for example, for driving vehicles having low travelling speeds with high slip, for instance at least 60%, which has a performance factor η of at least 70% calculated according to the formula:

$$\eta = \frac{S}{3\sqrt{2\gamma/g} \cdot F \cdot L^2}$$

S being the effective thrust in N, γ/g being the mass of 1 m³ of air in kg/m³, F being the circular area of the screw in m² and L being the power consumed in m²kg/S³, for 100% slip, characterized in that the ratio of the diameter (D) of the airscrew to its pitch (H) of one rotation is about 1.18 to 2.9 times the value of the performance factor and its blade width (B) corresponds to 0.09 to 0.19 times the value of the pitch (H).

2. Airscrew according to Claim 1, characterized in that it is designed with a pitch (H) which is constant or virtually constant over its diameter.

3. Airscrew according to Claim 1 or 2, characterized in that the aerodynamic centre of pressure is arranged at a distance from the centre which corresponds to about 3/4 of the radius of the airscrew.

4. Airscrew according to Claim 1, 2 or 3, characterized in that, as seen in cross-section, the radius of curvature of the leading edge (E) corresponds approximately to 1/4 to 1/3 of the greatest blade thickness ($B_s$).

5. Airscrew according to one of Claims 1 to 4, characterized in that the angle α of blade inclination continuously decreases as the diameter increases and is between about 45° and 10°.

6. Airscrew according to one of Claims 1 to 5, characterized in that the blade thickness ($B_s$) is greatest in the first third of the blade width away from the leading edge.

7. Airscrew according to one of Claims 1 to 6, characterized in that, as seen in cross-section, the radius of curvature of the leading edge (E) is greater than the radius of curvature of the trailing edge (A), the radius of curvature of the trailing edge (A) being at its smallest approximately in the region of the first outer third of the airscrew.

8. Airscrew according to one of Claims 1 to 7, characterized in that the radius of curvature of the trailing edge (A) always has approximately the same value in the region of the outer half of the airscrew.

9. Airscrew according to one of Claims 1 to 8, characterized in that, as seen in cross-section, the contour (U) of the suction surface in the region between greatest blade thickness ($B_s$) and trailing edge (A) is essentially a straight line (Fig. 3).

Fig. 1

Fig. 2

Fig. 3

EP 0 138 800 B1